Europäisches Patentamt

European Patent Office

Office européen des brevets

(11) Numéro de publication: **0 256 905 B1**

(12) FASCICULE DE BREVET EUROPEEN

(45) Date de publication de fascicule du brevet:
18.09.91

(51) Int. Cl.⁵: **C03B 23/035**, C03B 35/16

(21) Numéro de dépôt: **87401639.7**

(22) Date de dépôt: **10.07.87**

(54) **Positionnement des plaques de verre en vue de leur bombage.**

(30) Priorité: **16.07.86 FR 8610329**

(43) Date de publication de la demande:
**24.02.88 Bulletin 88/08**

(45) Mention de la délivrance du brevet:
**18.09.91 Bulletin 91/38**

(84) Etats contractants désignés:
**BE CH DE ES FR GB IT LI SE**

(56) Documents cités:
EP-A- 217 708    EP-A- 241 355
EP-A- 0 005 306  EP-A- 0 139 524
EP-A- 0 169 770  FR-A- 2 085 464
US-A- 3 992 182

(73) Titulaire: **SAINT-GOBAIN VITRAGE INTERNA-
TIONAL**
**18, avenue d'Alsace**
**F-92400 Courbevoie(FR)**

(72) Inventeur: **Vanaschen, Luc**
**Binsterweg 113**
**B-4700 Eupen(BE)**
Inventeur: **Boutier, Philippe**
**8, route Nationale**
**F-60150 Thourotte(FR)**

(74) Mandataire: **Leconte, Jean-Gérard et al**
**SAINT-GOBAIN VITRAGE 39, Quai Lucien Lefranc**
**F-93300 AUBERVILLIERS(FR)**

**Description**

La présente invention se rapporte au bombage de plaques de matériaux thermoplastiques, en particulier de plaques de verre, disponibles sur un support horizontal ou approximativement horizontal, par exemple un convoyeur d'amenée, ce bombage s'effectuant par application des plaques portées à leur température de ramollissement contre une forme supérieure, puis éventuellement par affaissement desdites plaques sur une forme inférieure après leur dépôt ou leur larguage sur ladite forme inférieure, cette forme inférieure étant généralement constituée par un anneau à profil courbe, ouvert en son centre, encore appelé squelette.

· La forme supérieure est une forme du type de celle décrite dans la demande de brevet français 2 085 464 et la demande de brevet européen EP-A1-241 355 déposée le 1er avril 1987 sous priorité du 8 avril 1986 et publiée le 14.10.87, ainsi appartenant à l'état de la technique visé à l'article 54, paragraphe 3, c'est-a-dire qu'elle est associée à un caisson d'aspiration et que l'aspiration du caisson s'exerce à la périphérie de la forme, amenant ainsi les plaques notamment de verre à être appliquées contre ladite forme. La forme supérieure peut également être d'un autre type décrit dans la publication européenne du brevet n° 3 391, à savoir elle peut être constituée d'un élément, percé de trous au travers desquels s'exerce une dépression.

Les plaques à bomber, et nous ne prendrons désormais en exemple que les plaques de verre, sachant malgré tout qu´elles peuvent être en tout matériau thermoplastique, sont prises en charge par la forme supérieure, soit grâce à l'aspiration exercée à la périphérie (document de brevet FR 2 085 464 ou EP-A-241 355) ou au travers de la forme supérieure (brevet européen 3 391) soit grâce à un courant de gaz dirigé vers le haut, contre la feuille de verre, de manière à la soulever (brevet européen 5 306 et 169 770). Dans ce dernier cas, les feuilles sont entièrement prises en charge par le courant gazeux ascendant qui les presse contre la forme supérieure de bombage.

Le positionnement des plaques de verre sous la forme supérieure doit être très précis, en particulier lorsque ladite forme supérieure est courbe.

Lorsque les plaques de verre arrivent sur un convoyeur, on arrive assez bien à contrôler leur position d'arrêt sous la forme supérieure, dans la direction longitudinale de défilement du convoyeur, grâce à des butées, par exemple du type de celles décrites dans la demande de brevet européen EP-A1-217 708 déposée le 18 septembre 1986 sous priorité du 18 septembre 1985 et publiée le 06.04.1987, ainsi appartenant à l'état de la technique visé à l'article 54, paragraphe 3

Par contre, l'orientation et la position dans la direction transversale par rapport à la direction de défilement, sont plus difficiles à maîtriser. Il est bien sûr possible, comme cela se fait à l'heure actuel le, de définir la position des plaques de verre, très en amont, avant leur entrée dans le four de réchauffage qui précède le poste de bombage. Après un certain nombre d'essais, on arrive à définir la position à donner aux plaques de verre, en mont du four, pour qu'elles s'arrêtent en bonne position sous la forme de bombage supérieure. Mais cela implique des tâtonnements, nécessite des corrections fréquentes, ne fournit pas une précision extrême, ne met pas à l'abri des déviations accidentelles des plaques pendant leur transport.

Il est également possible de prévoir des dispositifs de recentrage des plaques de verre sous la forme supérieure, mais cela fait frotter lesdites plaques sur leur support, en particulier les rouleaux du convoyeur, ce qui risque d'abîmer la surface du verre, et si les efforts appliqués sur les bords des plaques pour obtenir leur recentrage sont vraiment importants, ce qui risque également de détériorer les bords des plaques.

La présente invention vise à permettre un centrage des plaques, notamment en verre, en supprimant ou tout du moins en minimisant les frottements et les défauts de la surface et des bords des plaques qui en résultent.

Elle propose pour cela un procédé de bombage de plaques en matériau thermoplastique, notamment en verre, selon lequel les plaques sont conduites par un convoyeur à rouleaux sous une forme inférieure, un courant gazeux ascendant prenant en charge de 10 à 80 % du poids de la plaque dans la dernière partie de son trajet située sous la forme supérieure, sont stoppées et sont appliquées contre ladite forme supérieure avant d'être éventuellement déposées ou larguées sur une forme inférieure, notamment du type en forme d'anneau. Conformément à l'invention, dans la dernière partie de leur trajet, les plaques sont centrées sous la forme de bombage perpendiculairement à la direction de défilement.

Avantageusement, ce courant gazeux est chaud pour ne pas entraîner le refroidissement des plaques prêtes à être bombées.

Avantageusement, dans le cas de bombage de plaques de verre d'épaisseurs classiquement employées dans l'automobile ou le bâtiment, la pression dynamique de soufflage est de l'ordre de 49 à 295 Pa (5 à 30 mm de colonne d'eau) et avantageusement de l'ordre de 49 à 147 Pa (5 à 15 mm de colonne d'eau) pour des plaques de verre de 3 à 4 mm d'épaisseur.

L'invention propose également un dispositif de bombage de plaques en matériau thermoplastique, notamment en verre, ce dispositif comportant un convoyeur à rouleaux, une forme de bombage supérieure contre laquelle les plaques sont destinées à être appliquées, une enceinte de gaz sous pression ayant une cloison supérieure de fermeture munie d'une pluralité de sorties, disposée sous le convoyeur à rouleaux et sous la forme supérieure de bombage et soufflant vers le haut un courant gazeux apte à prendre en charge de 10 à 80 % du poids des plaques, des moyens centrage des plaques étant disposés sous la forme supérieure de bombage, par rapport au trajet des plaques.

L'invention sera maintenant décrite plus en détail en relation avec les figures jointes qui représentent :

- **figure 1** : un schéma général d'une installation de bombage de plaques de verre,
- **figure 2** : un schéma des moyens de sustentation partielle disposés sous la forme de bombage,
- **figure 3** : un schéma des moyens de recentrage.

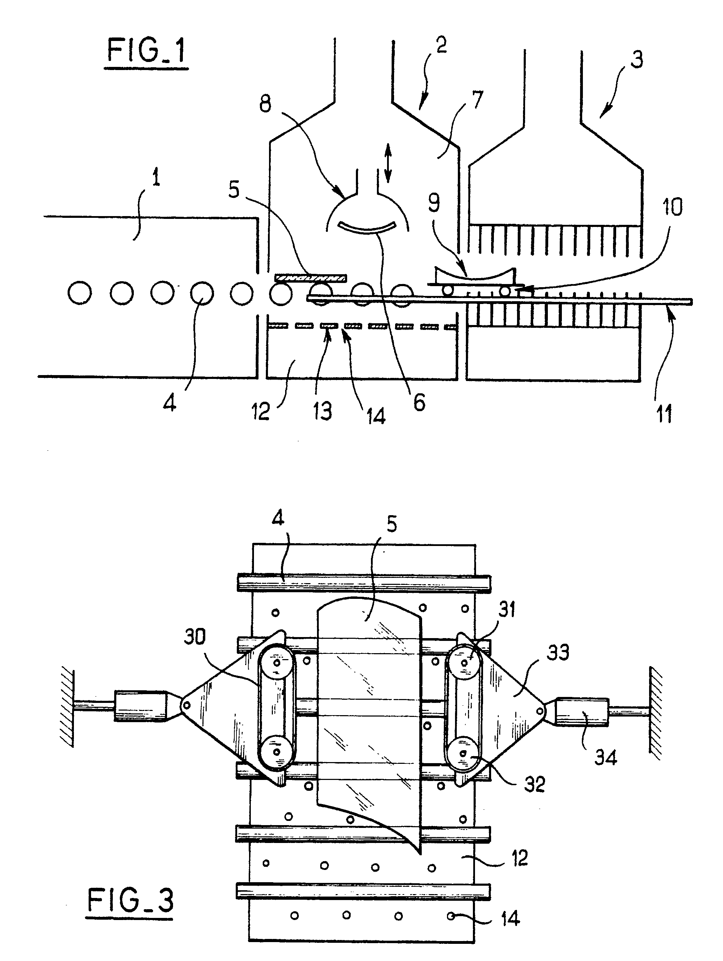

La figure 1 montre l'ensemble d'une installation de bombage utilisant une forme supérieure, et une forme inférieure, ainsi qu'un poste de trempe faisant suite au poste de bombage.

Bien entendu, l'invention reste identique si le poste de trempe est remplacé par un poste de recuisson ou étenderie, ou un autre poste.

Sur cette figure 1, sont représentés schématiquement un four 1 de réchauffage du verre, puis un poste de bombage 2, puis un poste de trempe 3. Un convoyeur à rouleaux 4 traverse le four 1 et amène des plaques de verre 5 sous une forme de bombage supérieure 6 placée à l'intérieur d'une enceinte 7, maintenue à température élevée. La forme 6 représentée est du type décrit dans le document de brevet français n° 2 085 464 déjà cité, c'est-à-dire qu'elle est associée à un caisson d'aspiration 8 et que la dépression s'exerce à la périphérie de la forme 6. Cette forme 6 est mobile en hauteur. Une forme de bombage inférieure telle un cadre ou anneau ou encore squelette, montée sur un chariot 10 peut être prévue pour récupérer chaque plaque de verre 5 après qu'elle ait été relachée par la forme supérieure 6. Ce chariot 10 est mobile sur des rails 11 de façon à pouvoir être avancé sous la forme 6 puis évacué en dehors du poste de bombage 2, par exemple pour amener les plaques de verre 5 au poste de trempe 3 qui fait suite. Les plaques de verre relachées par la forme supérieure 6 parfont leur bombage par affaissement sur la forme inférieure 9.

Selon l'invention est prévue au moins sous le poste de bombage 2 une enceinte de gaz sous pression 12 munie sur sa face supérieure d'une cloison de fermeture 13 munie d'une pluralité de sorties 14 telles de simples trous.

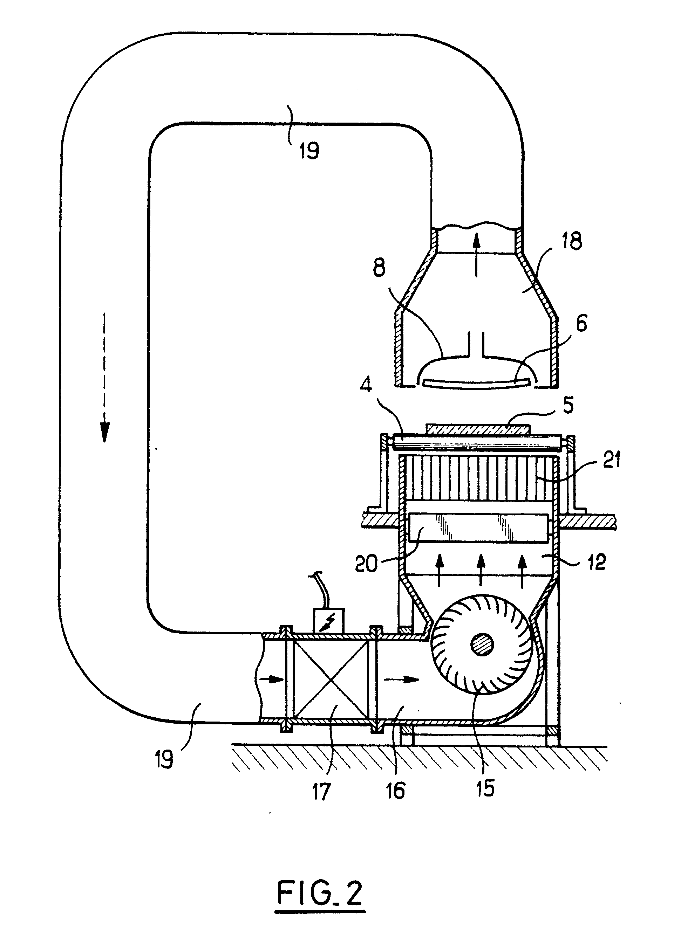

Dans une forme de réalisation illustrée par la figure 2, cette enceinte 12 de gaz sous pression est alimentée par un ventilateur 15 par exemple à flux transversal.

Ce ventilateur 15 et cette enceinte 12 font partie d'un ensemble de soufflerie comprenant un canal d'alimentation 16 du ventilateur 15, des moyens électriques 17 de chauffage disposés en tête du canal d'alimentation 16 pour chauffer le courant de gaz à la température nécessaire de 650° C environ pour du verre, une hotte 18 de récupération du gaz chaud soufflé disposée au dessus de la forme de bombage supérieure 6, une conduite 19 de recyclage, des volets mobiles 20 grâce auxquels on peut modifier le débit de gaz soufflé, des déflecteurs verticaux 21 qui servent à régulariser l'écoulement du gaz.

Par réglage du régime du ventilateur 15 et/ou un jouant sur la position des volets 20, la vitesse d'écoulement du gaz chaud, notamment de l'air, peut être réglée de façon à faire régner sous les plaques de verre une pression dynamique homogène de l'ordre de 5 à 30 mm de colonne d'eau et de préférence de l'ordre de 5 à 15 mm CE. Cette pression est réglée en fonction de l'épaisseur et donc du poids des feuilles de verre traitées.

Ainsi, une partie du poids des plaques de verre peut être prise en charge par ce courant gazeux, de l'ordre de 10 à quelques dizaines de pour cent (jusqu'à 80 %) du poids total.

Il en résulte que le convoyage des plaques de verre sur les rouleaux du convoyeur est toujours assuré, mais le poids des plaques de verre se faisant moins sentir, tout recentrage desdites plaques par glissement sur leur support peut s'opérer avec moins de frottement qu'en l'absence d'un tel soufflage inférieur, et donc avec moins ou pas de détérioration de la surface du verre et avec moins d'efforts exercés sur les bords du verre. La pression limite du soufflage est celle pour laquelle le verre ne reposerait plus sur son support, notamment le convoyeur, auquel cas le transport ne serait plus possible sans moyen d'entraînement adapté supplémentaire. Juste avant cet état limite, l'appui sur le convoyeur ne serait plus suffisant pour assurer un arrêt suffisamment précis du verre dans la direction longitudinale de son avancement.

Les moyens de recentrage des plaques de verre dans la direction transversale sont du type doigts, règles, bandes, etc. disposés sur les bords du trajet des plaques de verre, ces doigts ou règles étant mobiles dans la direction transversale pour venir porter sur les bords du verre, les pousser et aussi pour s'adapter à différentes tailles de plaques de verre.

Avantageusement, ces moyens de centrage sont mobiles longitudinalement en même temps que les plaques de verre.

Il peut s'agir de bandes 30 telles que celles montrées sur la figure 3, tournant chacune autour de deux tambours 31, 32, chaque ensemble étant monté sur une platine 33 déplaçable en direction du verre grâce à un vérin 34.

La direction de poussée de ces moyens de recentrage est la direction transversale par rapport à la direction longitudinale de défilement du verre. Si besoin était, bien entendu, des moyens de centrage dans la direction longitudinale pourraient aussi être adoptés.

Non seulement grâce à ces moyens de centrage agissant alors qu'une partie du poids du verre est annihilée par le soufflage ascendant, la qualité du verre n'est pas dégradée, mais en outre, l'opération de recentrage est beaucoup plus rapide qu'en l'absence de soufflage.

Bien entendu, ce recentrage peut s'opérer sur des plaques de verre uniques, comme sur des empilements de plaques de verre.

Ce recentrage sans altération du verre, présente un intérêt important spécialement dans le cas de formes complexes à donner aux plaques de verre, une précision extrême de la position du verre sous la forme de bombage supérieure étant alors impérative.

**Revendications**

1. Procédé de bombage de plaques (5) en matériau thermoplastique, notamment en verre selon lequel les plaques (5) sont conduites par un convoyeur à rouleaux (4) sous une forme supérieure (6), un courant gazeux ascendant prenant en charge de 10 à 80 % du poids de la plaque (5) dans la dernière partie de son trajet située sous la forme supérieure (6), sont stoppées et sont appliquées contre ladite forme supérieure (6) avant d'être éventuellement déposées ou larguées sur une forme inférieure (9), notamment du type en forme d'anneau, **caractérisé en ce que** dans ladite dernière partie de leur trajet, les plaques (5) sont centrées sous la forme de bombage (6) perpendiculairement à leur direction de défilement.

2. Procédé de bombage selon la revendication 1, **caractérisé en ce que** le courant gazeux est à une température de 650° C **et en ce que** sa pression dynamique de soufflage est de l'ordre de 49 à 295 Pa (5 à 30 mm de CE) et de préférence de l'ordre de 49 à 147 Pa (5 à 15 mm de CE) pour des plaques en verre de 3 à 4 mm d'épaisseur.

3. Dispositif de bombage de plaques (5) en matériau thermoplastique, notamment en verre, comprenant un convoyeur à rouleaux (4), une forme de bombage supérieure (6) contre laquelle les plaques (5) sont destinées à être appliquées, une enceinte de gaz sous pression (12) ayant une cloison supérieure de fermeture (13) munie d'une pluralité de sorties (14), disposée sous le convoyeur à rouleaux (4) et sous la forme de bombage supérieure (6) et soufflant vers le haut un courant gazeux apte à prendre en charge de 10 à 80 % du poids des plaques, **caractérisé en ce qu'**il comporte des moyens de centrage (30) des plaques (5) disposées sous la forme supérieure de bombage (6) latéralement par rapport au trajet des plaques (5).

4. Dispositif selon la revendication 3, **caractérisé en ce que** le courant gazeux soufflé sous les plaques de verre (5) est obtenu par une soufflerie comprenant essentiellement un ventilateur (15), des moyens de chauffage (17), une hotte d'aspiration (18), une conduite de recyclage (19), des volets (20) et des déflecteurs (21).

**Claims**

1. Method of curving plates (5) of thermoplastic material, notably of glass, according to which the plates (5) are brought by a roller conveyor (4) beneath an upper mould (6), an ascending gaseous current taking over from 10 to 80% of the weight of the plate (5) in the latter part of its travel situated beneath the upper mould (6), are stopped and are applied against said upper mould (6) before being, as the case may be, deposited or dropped onto a lower mould (9), notably of the ring-shaped type, characterized in that, in the latter part of their travel, the plates (5) are centered beneath the upper mould (6) perpendicularly to their direction of travel.

2. Method of curving according to Claim 1, characterized in that the gaseous current is at a temperature of 650° C and in that its dynamic blowing pressure is of the order of 49 to 295 Pa (5 to 30 mm w.g.) and preferably of the order of 49 to 147 Pa (5 to 15 mm w.g.) for glass plates of 3 to 4 mm thickness.

3. Device for curving plates (5) of thermoplastic material, notably of glass, comprising a roller conveyor (4), an upper curving mould (6) against which the plates (5) are intended to be applied, a pressurized gas enclosure (12) having an upper closure wall (13) provided with a plurality of outlets (14), disposed beneath the roller conveyor (4) and beneath the upper curving mould (6) and blowing upwards a gaseous current adapted for taking over from 10 to 80% of the weight of the plates, characterized in that the device comprises centering means (30) for the plates (5) disposed beneath the upper curving mould (6) laterally of the path of the plates (5).

4. Device according to Claim 3, characterized in that the gaseous current blown beneath the glass plates (5) is created by a blowing assembly comprising essentially a blower (15), heating means (17), a suction hood (18), a recycling duct (19), dampers (20) and deflectors (21).

**Patentansprüche**

1. Verfahren zum Biegen von Platten (5) aus thermoplastischem Material, insbesondere aus Glas, bei welchem die Platten (5) von einem Rollenförderer (4) unter eine obere Form (6) transportiert werden, wobei ein aufsteigender Gasstrom 10 bis 80 % des Gewichts der Platte (5) im letzten, unter der oberen Form (6) gelegenen Abschnitt der Transportbahn aufnimmt, und bei welchem die Platten (5) angehalten und an die obere Form (6) zur Anlage gebracht werden, bevor sie gegebenenfalls auf eine untere, insbesondere ringförmige Form (9) abgelegt oder abgeworfen werden, **dadurch gekennzeichnet,** daß im letzten Abschnitt ihrer Transportbahn die Platten (5) unter der Biegeform (6) senkrecht zu ihrer Durchlaufrichtung zentriert werden.

2. Verfahren nach Anspruch 1, dadurch gekennzeichnet, daß der der Gasstrom eine Temperatur von 650° C aufweist und daß dessen dynamischer Blasdruck im Bereich von 49 bis 295 Pa (5 bis 30 mm Wassersäule) und vorzugsweise im Bereich von 49 bis 147 Pa (5 bis 15 mm Wassersäule) bei Glasplatten mit einer Dicke von 3 bis 4 mm liegt.

3. Vorrichtung zum Biegen von Platten (5) aus thermoplastischem Material, insbesondere aus Glas, umfassend einen Rollenförderer (4), eine obere Biegeform (6), an welche die Platten (5) angelegt werden sollen, eine Druckgaskammer (12) mit einer oberen Verschlußwand (13), die mehrere Austrittsöffnungen (14) aufweist, die unter dem Rollenförderer (4) und unter der oberen Biegeform (6) angeordnet ist und einen Gasstrom nach oben bläst, der geeignet ist, 10 bis 80 % des Gewichts der Platten aufzunehmen, dadurch gekennzeichnet, daß diese Vorrichtung Zentrierungseinrichtungen (30) für die Platten (5) umfaßt, die unter der oberen Biegeform (6) seitlich bezüglich des Durchlaufs bzw.

der Transportbahn der Platten (5) angeordnet sind.

4. Vorrichtung nach Anspruch 3, dadurch gekennzeichnet, daß der unter die Glasplatten (5) geblasene Gasstrom durch ein Gebläse entsteht, das im wesentlichen einen Ventilator (15), Heizvorrichtungen (17), einen Lüftungsaufsatz (18), eine Rückführungsleitung (19), Klappen (20) sowie Deflektoren (21) umfaßt.

FIG_1

FIG_3

FIG. 2